# EUROPÄISCHE PATENTSCHRIFT

(11) **EP 1 520 649 B1**
(45) Veröffentlichungstag und Bekanntmachung des Hinweises auf die Patenterteilung: **08.10.2008**
(21) Anmeldenummer: 04019642.0
(22) Anmeldetag: 18.08.2004
(51) Int. Cl.: B23D 35/00, B23D 15/04

(54) **Schneideeinheit für eine Schlagschneidevorrichtung**
Cutting unit for an impact cutting device
Unité de coupe pour un dispositif de coupe par impact

(30) Priorität: 01.10.2003 DE 10345864
(43) Veröffentlichungstag der Anmeldung: 06.04.2005
(73) Patentinhaber: Schuster, Helmut, 86920 Denklingen (DE)
(72) Erfinder: Schuster, Helmut, 86920 Denklingen (DE)
(74) Vertreter: Mollekopf, Gerd Willi

(56) Entgegenhaltungen:
- EP-A- 0 280 983
- EP-A- 0 833 714
- DE-A- 19 540 113
- SU-A- 749 578
- US-A- 4 063 483

## Beschreibung

Die Erfindung betrifft eine Schneideeinheit für eine Schlagschneidevorrichtung, insbesondere für eine Schlagschneidevorrichtung zum adiabatischen Trennen von Werkstücken. Eine Schneideinheit gemäß dem Oberbegriff von Anspruch 1 ist aus der EP 0 833 714 bekannt.

Beim Hochgeschwindigkeits-Schlagschneiden wird ein hoher Impuls auf eine bewegliche Matrize übertragen, die durch den Impuls lateral gegen eine starre Matrize verschoben wird. Zwischen den Matrizen ist in einem Durchgang durch die Matrizen das Werkstück eingespannt, wobei deren Querschnitt dem des zu trennenden Werkstücks entspricht. Die Beobachtungen zeigen, dass das zu schneidende Werkstück bei sehr kurz, aber heftig einwirkendem Impuls nahezu ohne plastische Verformung trennbar ist. Dabei wird die verschiebbare Matrize lediglich um wenige zehntel Millimeter gegenüber der starren Matrize versetzt. Problematisch ist hierbei einerseits, einen reproduzierbaren Impuls mit genauer Stärke auf die bewegliche Matrize zu übertragen, und andererseits die Impulsenergie, die nicht in Trennenergie umgewandelt wurde, so zu dämpfen, dass die Schlagschneidevorrichtung auch für den Dauereinsatz geeignet ist.

In der DE 695 19 238 T2 (entsprechend EP 0 833 714 B1) ist eine Schlagmaschine beschrieben, bei der das Werkstück zwischen einer starren und einer beweglichen Matrize eingespannt ist. Auf der beweglichen Matrize ruht ein Schlagbolzen, auf den mittels eines hydraulisch bewegten Kolbens ein Schlagimpuls übertragen wird. Ziel ist es hier, eine möglichst hohe Schlagrate zu erreichen, so dass beispielsweise eine hohe Schneiderate von Drahtstiften bestimmter Länge erreicht wird. Zur Erreichung der hohen Schlagrate durch den hydraulisch betätigten Kolben wird eine spezielle Kolben/Zylinderanordnung vorgeschlagen.

Auch die US 4,840,236 schlägt einen hydraulisch-pneumatischen Aktuator zur Übertragung hoher Impulse auf ein zu komprimierendes oder zu schneidendes Werkstück vor. Neben einer Zylindergestaltung für eine hohe Beschleunigung des Kolbens wird auch eine Anordnung zur Abbremsung des Kolbens vorgeschlagen.

Die SU 749 578 A offenbart eine Schereinrichtung, die druckbetätigt ein in einer Schneideeinheit gehaltenes, zu trennendes Werkstück abschert. Die Schneideeinheit hat eine Matrize mit einem nur geringen Auslenkungsweg und eine gegen die starre Matrize bewegliche Matrize, unterhalb derer Federelemente angeordnet sind. Die Federelemente wirken als Rückstellelemente. Nach dem Abscheren des Werkstücks erfolgt eine Rückstellung der ausgelenkten Matrizen durch die Federn.

Die WO 97/00751 A1 offenbart eine Impulstrennmaschine mit einen hydraulisch betätigten Kolben, der hydraulisch betätigt nach unten gegen ein Zwischenstück einen Impuls überträgt, wobei das Zwischenstück wiederum den Impuls auf eine bewegliche Matrize überträgt. Die bewegliche Matrize ist zwischen zwei starren Matrizen gelagert. Eine Dämpfungseinrichtung ist unterhalb der beweglichen Matrize angeordnet und ein Rückstellkolben wird durch die Dämpfungseinrichtung betätigt, um die bewegliche Matrize in ihre Ausgangsposition zurückzustellen. Der Rückstellkolben überträgt den Impuls beim Schneiden nach unten auf einen Dämpfungskolben, der den Auslenkungsweg bestimmt. Beim Ausführen des Schlages auf die bewegliche Matrize wird der Rückstellkolben nach unten verschoben, bis er auf die Oberseite des Dämpfungskolbens trifft, der dann durch die hydraulische Wechselwirkung mit dem unterhalb des Kolben$ eingefüllten Hydrauliköl die Dämpfung bewirkt.

Es ist Aufgabe der Erfindung und eine Schneideeinheit, eine Schlagschneidevorrichtung vorzusehen, die die beim Schlagschneiden anfallende, überschlussige Schlagenergie dämpft.

Diese Aufgabe wird mit den Merkmalen des Anspruchs 1 bzw. 11 gelöst. Vorteilhafte Ausgestaltungen sind Gegenstand der Unteransprüche.

Bei der Schneideeinheit ist zwischen einem beweglichen Matrizenelement und einer Stützstruktur für die Schneideeinheit eine Dämpfungseinrichtung zwischen der der Schlagseite der beweglichen Matrize gegenüberliegenden Seite und der Stützstruktur angeordnet. Mit dem Dämpfungselement wird überschüssige Energie vom Schlag gedämpft, falls die Schlagenergie nicht vollständig in Trennenergie und Wärmeenergie überführt werden konnte. Somit wird die Ausbreitung überschüssiger Schlagenergie, die gerade bei toleranzbehafteten Werkstücken von Schlag zu Schlag stark variieren kann, auf einen möglichst kleinen Teilbereich des Schneidewerkzeugs begrenzt und eine Ausbreitung auf eine Schneidvorrichtung weitgehend verhindert.

Ganz besonders vorteilhaft ist das Dämpfungselement in Schlagrichtung vorgespannt mit einer Vorspannung, die vorzugsweise von der Stärke des zu bearbeitenden Werkstücks abhängt. Durch die Vorspannung verschiebt sich das bewegliche Matrizenelement mit Aufsetzen des Schlagelements auf die Oberseite der beweglichen Matrize nicht unmittelbar, sondern die bewegliche Matrize wird zunächst zwischen dem Schlagelement und der Unterlage (Dämpfungselement) eingespannt mit einer Kraft bis zur Höhe der Vorspannung. Erst wenn die Vorspannung überwunden ist, setzt sich das bewegliche Matrizenelement in Bewegung und die weitere Schlagenergie wird dann durch die adiabatische Trennung und gegebenenfalls weitere Dämpfung durch das Dämpfungselement umgesetzt. Durch die Klemmung des beweglichen Matrizenelements zwischen Schlageinrichtung und Dämpfungselement wird eine stabilisierende Ausrichtung des beweglichen Matrizenelements innerhalb der Schneideinheit erreicht. Besonders bei Verwendung eines beweglichen Matrizenelements mit veränderbarem Querschnitt bewirkt die Klemmung zunächst eine spielfreie Anlage der Matrizeninnenflächen (in Schlagrichtung) an der Außenfläche des Werkstücks, so dass ein Verkanten des Werkstücks mit Einsetzen der Bewegungsphase des beweglichen Matrizenelements verhindert wird.

Ist eine Einstellbarkeit der Vorspannung am Dämpfungselement mittels einer Vorspanneinrichtung vorgesehen, so lässt sich die Klemmkraft in Abhängigkeit der Stärke oder der Formgebung des zu bearbeitenden Werkstücks anpassen. Vorteilhaft ist mittels einer Vorspanneinrichtung die Vorspannung am Dämpfungselement automatisch einstellbar, so dass während des laufenden Produktionsbetriebs eine Anpassung oder Optimierung der Vorspannung ermöglicht ist. Die Vorspanneinrichtung kann dabei die Vorspannung des Dämpfungselements erhöhen und/oder verringern. Vorteilhaft umfasst die Dämpfungseinrichtung einen Luftspalt umfasst, in den insbesondere Pressluft mit vorgegebenem Druck und/oder Durchfluss einleitbar ist.

Ganz besonders vorteilhaft wird mittels einer Ringfeder als Dämpfungseinrichtung die Überschussenergie innerhalb einer sehr kurzen Strecke in Wärmeenergie umgewandelt.

In Ausgestaltung ist eines oder sind beide Matrizenelemente zumindest zweiteilig aufgebaut, so dass eine Relativbewegung der Einzelteile eines Matrizenelements eine Anlage desselben an der Außenfläche des Werkstücks ermöglicht. Besonders vorteilhaft ist das Matrizenelement zumindest quer zur Schlagrichtung getrennt, wobei vorteilhaft gegenüber einem einteiligen Matrizenelement, dessen Querschnittfläche die Toleranz des Werkstücks berücksichtigt, die Höhe der Trennfuge so bemessen ist, dass diese ungefähr die Differenz zwischen dem größten Querschnitt des Werkstücks und dem kleinsten Querschnitt des Werkstücks beträgt.

Vorteilhaft weist ein Matrizenelement mit veränderbarem Querschnitt gegeneinander verstellbare Innensegmente auf, wobei zwischen jeweils zwei Innensegmenten ein elastisches Element angeordnet ist, die insbesondere unter Vorspannung zwischen den Innensegmenten geklemmt sind. Dadurch werden die Innensegmente voneinander getrennt und ein Werkstück freigegeben, sobald die Klemmung der Innensegmente freigegeben ist. Vorteilhaft ist zumindest eines der Innensegmente mittels einer Verdrehsicherung gegen Verdrehung gesichert.

Bei einer weiteren Ausgestaltung weist zumindest ein Matrizenelement einen von der Aufnahmeöffnung für das zu trennende Werkstück ausgehenden Spalt mit veränderbarem Spaltmaß auf Vorteilhaft ist eine Betätigungseinrichtung zum Verändern des Spaltmaßes vorgesehen. Vorteilhaft ist das Spaltmaß durch die Betätigungseinrichtung und/oder das Einführen des zu bearbeitenden Werkstücks erweiterbar ist.

Ist zusätzlich oder alternativ ein Luftspalt als Dämpfungseinrichtung vorgesehen und wird in den Luftspalt Pressluft eingeleitet, so werden einerseits Verunreinigungen aus dem Luftspalt abgeführt und andererseits dient die kontinuierliche Luftströmung zum Kühlen der Schneideeinheit.

Ist die bewegliche Matrize in einer Ausnehmung mit seitlicher Führung gelagert, so führt die in den Luftspalt zugeführte Luft ebenfalls zur Rückstellung des beweglichen Matrizenelements. Dies lässt sich dadurch unterstützen, dass bei ausgelenktem Matrizenelement die Luft aus dem Luftspalt nahezu nicht entweichen kann, und sich so ein Luftdruck aufbaut, der die Matrize mit erhöhter Kraft zurückstellt.

Ist zumindest das eine bewegliche Matrizenelement in einer Aufnahme mit seitlichen Begrenzungsflächen gelagert und werden die seitlichen Begrenzungsflächen mit Luft beaufschlagt, so werden einerseits Verunreinigungen daraus abgeführt, und das Luftpolster dient als Luftleitlager der Führung des beweglichen Matrizenelements in der Aufnahme. Weitet sich bei dem beweglichen Matrizenelement der Öffnungsquerschnitt von der Trennkante zur Zufuhr- oder Entnahmeseite des Werkstücks auf, so muss während des Schlagvorgangs nicht das gesamte, in der Matrize gefasste Werkstück die seitlich ausgeführte Beschleunigung ausführen. Damit erhöht sich die an der Schneidestelle wirkende Impulsenergie.

Bei einer Ansgestaltung der Schlagschneidevorrichtung gemäß Anspruch 11 wird vorgeschlagen, dass das Schlagelement, welches den Impuls auf eine Schneideeinheit überträgt, lösbar an eine Beschleunigungseinheit gekoppelt ist. Vor dem Auftreffen des Schlagelements auf die Schneideeinheit erfolgt durch eine Kopplungseinrichtung eine Entkopplung zwischen Beschleunigungseinheit und Schlagelement. Durch Entkoppeln der Vorgänge 'Schlagen' und 'Beschleunigen' kann jeweils der Schlagprozess und der Beschleunigungsprozess unabhängig voneinander optimiert werden, wobei vor allem durch die Entkopplung der Beschleunigungseinheit vom Schlagen diese wesentlich geringeren mechanischen Belastungen unterliegt. Weiterhin kann die Beschleunigung genau dann abgebrochen werden, wenn das Schlagelement den für das zu bearbeitende Werkstück notwendigen Impuls aufweist, so dass z.B. das Abbremsen der Beschleunigungseinheit wiederum nicht auf das Schlagelement und dessen Impuls zurückwirkt. Durch die freie 'Flugstrecke' des Schlagelements vor der Schneideeinheit ist auch eine exakte Justierung zwischen Beschleunigungseinheit und Schneideeinheit zur Reproduzierung eines vorgegebenen Schlagimpulses nicht notwendig.

Ganz besonders vorteilhaft greift ein Mitnehmer der Beschleuniguneseinheit in das Schlagelement ein und führt dieses zumindest während der Beschleunigungsphase bzw. über die Beschleunigungsstrecke mit. Über den Mitnehmer wird einerseits die Beschleunigungskraft auf das Schlagelement übertragen und andererseits eine sichere Führung des Schlagelements erreicht. Die Kopplung 'zumindest' über eine Beschleunigungsstrecke bedeutet hier, dass entweder der Mitnehmer lediglich während der Beschleunigungsphase bzw. über die Beschleunigungsstrecke an das Schlagelement gekoppelt ist und nach der Beschleunigung unmittelbar eine Entkopplung stattfindet. Oder es wird noch eine vorgegebene Zeit bzw. Strecke nach der Beschleunigung eine Kopplang aufrechterhalten, so dass der Mitnehmer kraftfrei an das Schlagelement koppelt.

Anhand von Zeichnungen werden Ausführungsformen der Erfindung erläutert. Es zeigen:
- Fig. 1A: eine schematische Vorderansicht einer Schlagschneidemaschine,
- Fig. 1B: eine Teilansicht der Schlagschneidemaschine beim Einkoppeln des Hammers,
- Fig. 1C: eine Teilansicht der Schlagschneidemaschine kurz vor dem Entkoppeln des Hammers,
- Fig. 1D: eine Seitenansicht der Schlagschneidemaschine,
- Fig. 2: einen schematischen Querschnitt einer Hammereinheit von oben,
- Fig. 3A: und 3B Querschnittsansichten einer Ausführung eines Matrizenblockes,
- Fig. 4A: und 4B zwei Ausführungsformen von Dämpfungselementen,
- Fig. 5: eine schematische Seitenansicht einer Doppelschlag-Schneidemaschine,
- Fig. 6: ein Blockschema der Steuerung einer Schlagschneidemaschine,
- Fig. 7A: eine Querschnittsansicht durch eine weitere Ausführung eines Matrizenblocks,
- Fig. 7B: eine eintrittseitige Ansicht des Matrizenblocks von Fig. 7A,
- Fig. 7C: eine Draufsicht auf den Matrizenblock von Fig. 7A,
- Fig. 8: eine eintrittseitige Ansicht und Querschnittsansicht des beweglichen Matrizenelements,
- Fig. 9: eine eintrittseitige Ansicht und Querschnittsansicht des starren Matrizenelements,
- Fig. 10A - 10C: Querschnittsansichten einer weiteren Ausführung eines Matrizenblocks,
- Fig. 11: eine weitere Ausführung einer Matrize mit veränderbarem Querschnitt,
- Fig. 12: eine schematische Ansicht der Aneinanderreihung von drei Matrizen für eine Doppeltrennung,
- Fig. 13: eine Querschnittsansicht einer weiteren Aufführung des Matrizenblocks von Fig. 10A, und
- Fig. 14: Spannscheiben für den Matrizenblock von Fig. 13.

Die bisherigen Schlagschneider sind darauf optimiert, ein Werkstück (meist ein bestimmtes Ausgangsmaterial und mit einer vorgegebenen Materialstärke in Drahtform) mit sehr hoher Schlagrate zu trennen, so dass viele Drahtstifte für die Weiterverarbeitung erzeugt werden können. Beim Einrichten der Maschine wird das System durch Versuche so optimiert, dass einerseits eine saubere Materialtrennung eintritt und andererseits eine möglichst geringe Umwandlung des Schlagimpulses in Schockwellen innerhalb des Gerätes auftritt. Durch die anschließend lange Nutzung der Maschine mit den optimierten Parametern ist die Optimierungszeit gerechtfertigt. Bei häufig wechselnder Werkstückart (Materialform, Materialstärke, verwendetes Material etc.) oder Abweichungen bei der Materialbeschaffenheit (Formfehler, Toleranzen, Lage des Materials in der Schneideeinrichtung, Lunker etc.) ist jedoch eine solche Optimierungsphase nicht gerechtfertigt.

Daher wird einerseits angestrebt, eine Änderung des Impulses des Schlagelements und die Optimierung der Schlagenergie auf möglichst einfache, reproduzierbare Weise zu erreichen. Dies ist aufgrund der dynamischen Prozesse in einem pneumatischen oder hydraulischen System sehr aufwändig und hängt von der Öltemperatur, vom verwendeten Öl, dessen Verschmutzung, der Abnutzung von Dichtelementen und dergleichen ab. Darüber hinaus sind bei den herkömmlichen Schlagschneidern das bewegte Schlagelement und die Beschleunigungseinrichtung auch während der Schlagphase miteinander verbunden, so dass einerseits die Beschleunigungseinheit mechanisch entsprechend stabil ausgelegt sein muss und andererseits einer starken mechanischen Beanspruchung unterliegt, die zum schnellen Verschleiß führen kann.

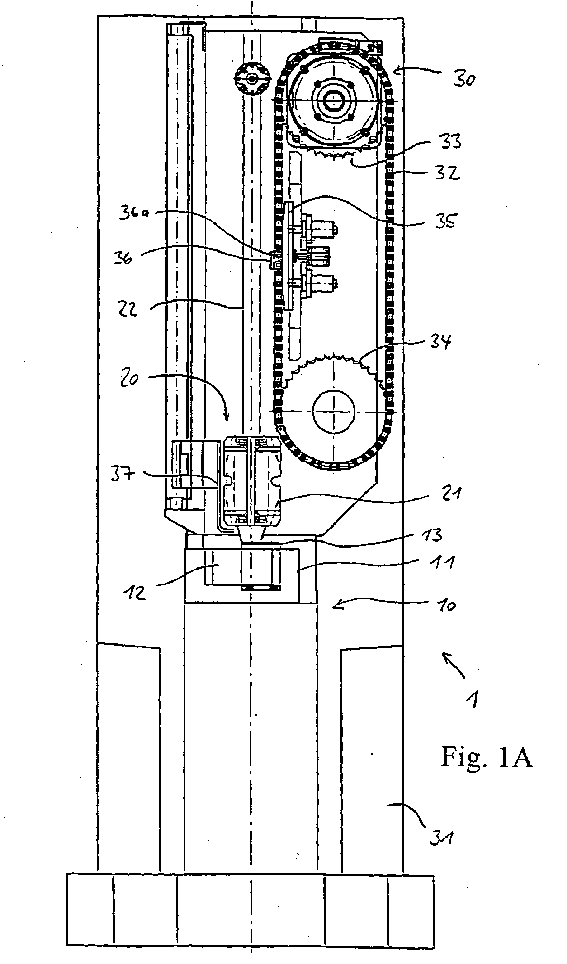

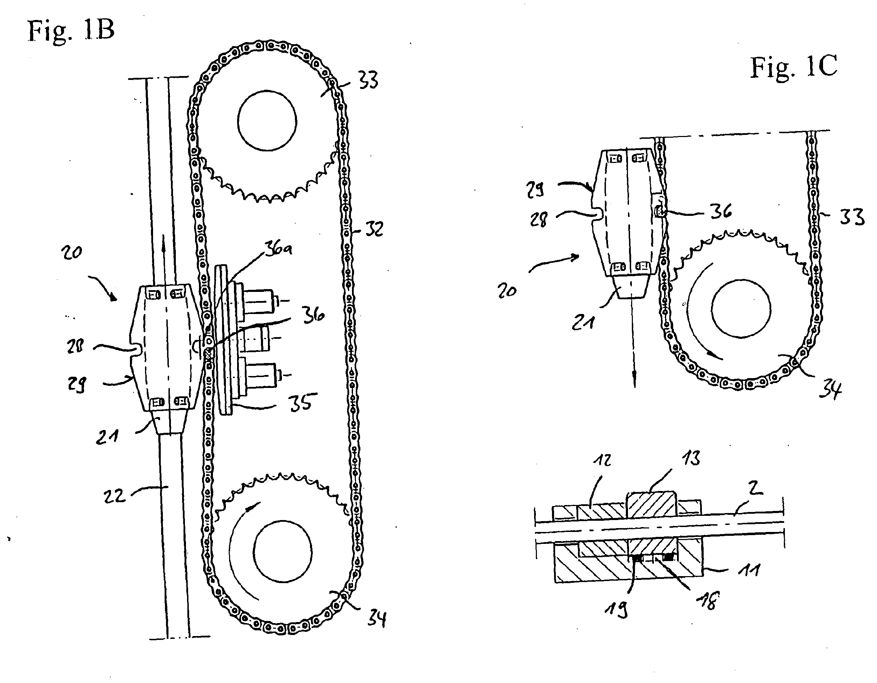

Fig. 1A zeigt schematisch eine Vorderansicht des Aufbaus einer Schlagschneidemaschine 1. Das zu schneidende Werkstück 2 (Fig. 1C) ist in einen Matrizenblock 10 eingespannt und wird dort durch Ausübung von Schlägen mittels der Hammereinheit 20 geschnitten. Ein Prallhammer 21 der Hammereinheit 20 wird durch ein Beschleunigungsaggregat 30 beschleunigt. Der Matrizenblock 10 ruht auf einer Tragstruktur 31, an die auch eine Führung 22 der Hammereinheit 20 und das Beschleunigungsaggregat 30 angekoppelt sind. Teile der Tragstruktur 31 sind aus Mineralguss ausgebildet, der neben der hohen Trageigenschaft eine besonders gute Dämpfung gegen die Ausbreitung von Schwingungen und Schockwellen aufweist. Eine Ausbreitung von Schwingungen oder Schockwellen ausgehend vom Matrizenblock auf den Werkhallenboden bzw. auf das Beschleunigungsaggregat 30 und die Hammereinheit 20 wird somit vermieden. Umgekehrt wird auch die Ausbreitung von Schwingungen ausgehend von der Hammereinheit 20 stark gedämpft.

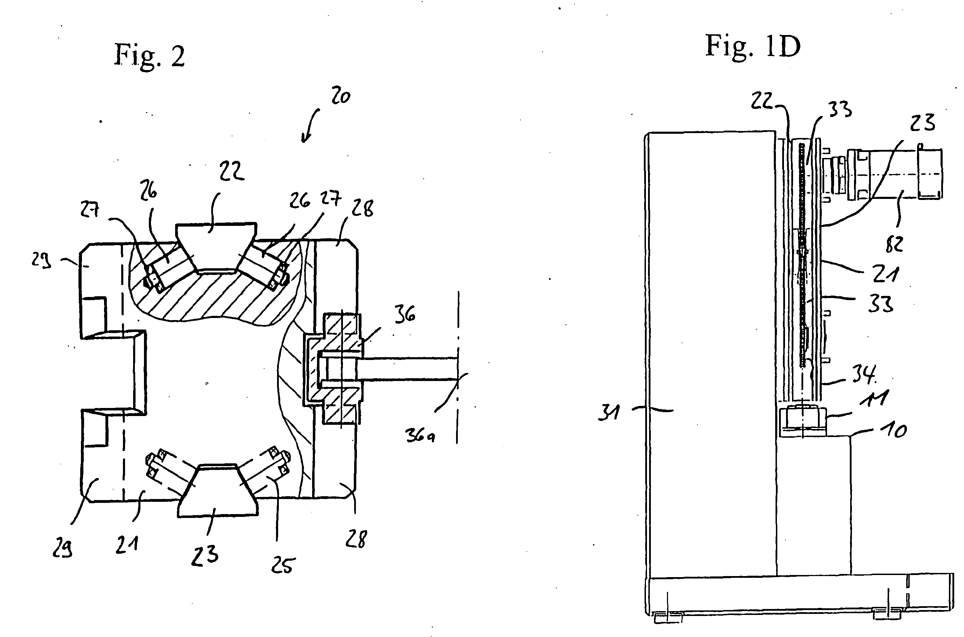

Beim Beschleunigungsaggregat 30 verläuft eine Kette 32 über ein oberes Antriebsrad 33 und ein unteres Umlenkrad 34. Das obere Antriebsrad 33 wird durch einen NCgesteuerten Servomotor 82 (Fig. 1D) angetrieben, der kurzzeitige, sehr hohe Beschleunigungen ermöglicht. Die Kette 32 führt einen Schlitten 36a mit, von dem ein Mitnehmer 36 hervorsteht, der wiederum in eine Ausnehmung 28 des Hammers 21 eingreift. Zumindest über einen Teil der Beschleunigungsstrecke verläuft neben der Kette 32 eine Kettenführung 35. Die Kettenführung umfasst einen Aktuator, hier einen pneumatischen Aktuator, der eine neben der Kette verlaufende Kettenführungsschiene senkrecht zur Kette zustellt. In der Beschleunigungsphase ist die Kettenführungsschiene der Kette beigestellt (wie in Fig. 1A dargestellt) und begrenzt bzw. dämpft seitliche, senkrecht zur Zugrichtung auftretende Kettenausschläge die durch die Beschleunigung bzw. das spätere Abbremsen hervorgerufen werden könnten. Die Kontaktfläche der Kettenführungsschiene zur Kette ist mit einem Gleitmaterial versehen.

Zum Einführen des Mitnehmers 36 in die Ausnehmung 28 beim Ankoppeln des Hammers 21 ist die Kettenführung zurückgezogen, so dass die Kette seitlich ausgelenkt werden kann: Fig. 1B stellt eine Teilansicht der Schlagschneidemaschine in einer Phase kurz vor dem Einkoppeln des Mitnehmers 36 in die Ausnehmung 28 des Hammers dar. Der Hammer ist durch eine Hebeeinheit 37 nach dem Schlag in die in Fig. 1B dargestellte Position angehoben und der Schlitten 36a wird durch die Kette 33 nach oben gefahren. Fig. 1C zeigt eine Phase während der Beschleunigung, während der der Mitnehmer 36 vollständig in die Ausnehmung 28 des Hammers 21 eingreift.

Bei einer hier nicht dargestellten Ausführung wird die Kette 32 alternativ oder zusätzlich durch das untere Rad 34 angetrieben, so dass die Kette zwischen dem unteren und oberen Rad 34, 35 über die Beschleunigungsstrecke gespannt und versteift ist.

Fig. 2 zeigt eine schematische Querschnittsansicht der Hammereinheit 20 von oben. Der Hammer 21 ist in einer ersten und zweiten Führungsschiene 23, 24 der Führung 22 geführt. Der Hammer 21 steht nicht unmittelbar mit den Führungsschienen 23, 24 in Berührung, sondern wird über Gleitblöcke 26, die in Vertiefungen 25 ruhen, an den Schienen 22, 23 gleitend geführt. Die Gleitblöcke 26 sind beispielsweise Metallmatrizen, in die Molybdänsulfid (MoS) als Gleitmittel eingelagert ist. Zwischen der Rückseite der Gleitblöcke 26 und dem Boden der Vertiefung 25 sind Dämpfungselemente 27 angeordnet, die Impulse des Hammers 21 in Wärme umsetzen und damit die Übertragung von Schwingungen oder Schockwellen vom Hammer 21 auf die Schienen 23, 24 dämpfen. Bei einer weiteren, hier nicht dargestellten Ausgestaltung können auch allen oder einem Teil der Seitenwände zwischen dem Gleitblock 26 und der Vertiefung 25 Dämpfungselemente zugeordnet sein. Der Mitnehmer 36 des Beschleunigungsaggregats 30 weist seitliche Vorsprünge auf, die über einen Steg mit dem Schlitten 36a verbunden sind. Die beiden seitlichen Vorsprünge des Mitnehmers 36 greifen in die beiden seitlichen Ausnehmungen 28 am Hammer 21 ein. An die Seitenwände der Ausnehmungen 28 schließen Rampen 29 an, wobei die Vorsprünge des Mitnehmers 36 beim Zurückführen des Hammers 21 aus der unteren Position (beim Matrizenblock 10) über die Rampe 29 gleiten. Dabei werden die Kette 32 und der Schlitten 36a ausgelenkt (Fig. 1B) und nach Erreichen der Ausnehmung 28 springen die Vorsprünge des Mitnehmers 36 in die Ausnehmung 28, so dass der Hammer 21 durch das Beschleunigungsaggregat 30 angehoben und in seine Startposition zurückgeführt werden kann.

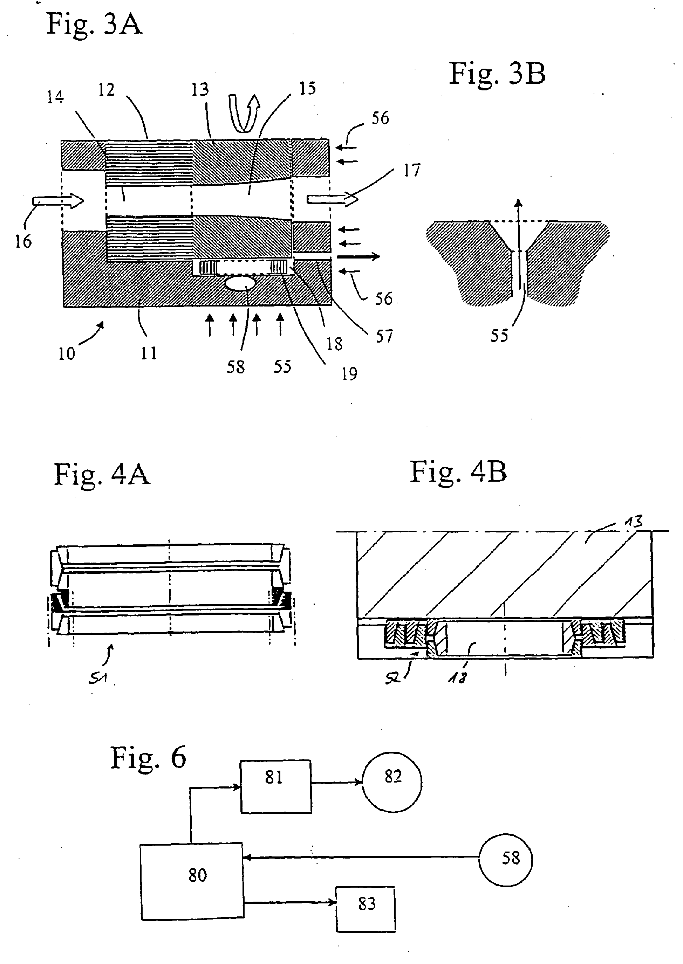

Fig. 3A zeigt einen Werkzeughalter 11 des Matrizenblocks 10 im Querschnitt. In eine von oben nach unten führende Ausnehmung des Werkzeughalters 11 sind eine starre Matrize 12 und eine bewegliche Matrize 13 austauschbar eingesetzt. Das Matrizenpaar 12, 13 hat einen ersten und zweiten Durchgang 14, 15, deren Querschnitt jeweils auf das zu bearbeitende Werkstück angepasst ist. Zum Schneiden eines Werkstücks einer anderen Beschaffenheit (Querschnitt, Material des Werkstücks, Form des Werkstücks usw.) wird jeweils das Matrizenpaar 12, 13 im Werkzeughalter 11 ausgetauscht. Durch nicht dargestellte Befestigungselemente wird die starre Matrize 12 fest im Werkzeughalter 11 gehalten, während unterhalb der beweglichen Matrize 13 eine Vertiefung 18 angeordnet ist, die während des Schlags eine geringe Bewegung der Matrize 13 nach unten erlaubt. Der Hammer 21 und/oder die Matrizen 12, 13 sind aus einem besonders schlagfesten Stahl ausgebildet, beispielsweise von der Firma STM-Stahl das Produkt der Kennnummer 1.2379 (Spezialstahl). Durch die Pfeile 16 und 17 sind die Eintrittsseite und die Austrittsseite des Werkstücks 1 am Werkzeughalter 11 dargestellt, wobei natürlich ein umgekehrtes Einführen und Entnahme des Werkstücks ebenso möglich ist. Der gebogene Pfeil symbolisiert die Ausführung des Schlags auf die bewegliche Matrize 13.

Der zweite Durchgang 15 der beweglichen Matrize 13 weitet sich von der Schnittstelle zur Eintritts- bzw. Austrittsseite 17 hin auf. Dadurch ist einerseits das Werkstück im Bereich der Schnittkante spielfrei gefasst, während bei längeren Werkstücken ein Versetzen des Endes des Werkstücks außerhalb der Matrize 13 beim Schlagschneiden vermieden wird. Dadurch reduziert sich die während des Schlags zu beschleunigende Masse und die aufzubringende Impulsenergie ist bei längeren Werkstücken weitgehend unabhängig von der Länge des abzutrennenden Werkstücks.

In der Vertiefung 18 ist ein Dämpfungselement 19 angeordnet, das den Schlagimpuls bzw. den Teil des Schlagimpulses, der nicht in Trennungs- und Deformationsenergie beim Schlag umgewandelt wurde, auffängt und in Wärme umwandelt. Das Dämpfungselement 19 setzt einer Verschiebung der beweglichen Matrize 13 eine sehr hohe Kraft entgegen, so dass diese auch bei Vorhandensein von Überschussenergie innerhalb einer sehr kurzen Auslenkungsstrecke vollständig abgebremst wird. Fig. 4A und 4B zeigen zwei Ausführungsbeispiele für das Dämpfungselement 19. Der erste Federring 51 ist aus fünf ineinander verkeilten, geschlossenen Ringelementen ausgebildet. Die so ausgebildete Reibungsfeder setzt die Verschiebung der Ringe durch Reibung in Wärmeenergie um und bewirkt eine effiziente Dämpfung der beweglichen Matrize 13. Mit 52 ist eine zweite Federringanordnung bezeichnet, bei der die Ringe teilweise übereinander und untereinander positioniert sind, so dass die Grundfläche der Ausnehmung 18 weiter ausgenutzt wird.

Nach Ausführung eines Schlags auf das bewegliche Matrizenelement 13 erfolgt die Rückstellung der Matrize 13 durch das Dämpfungselement 19. Alternativ oder zusätzlich kann wie in Fig. 3A dargestellt, die Rückstellung durch Aufbau eines Druckluftpolsters unterhalb des ausgelenkten Matrizenelements 13 ausgeführt werden. In die Vertiefung 18 wird, wie durch die Pfeile 55 symbolisiert, Druckluft eingeleitet, die bei angehobenem Matrizenelement 13 durch einen Auslass 57 entweicht. Bei abgesenktem Matrizenelement 13 wird der Luftauslass 57 ganz oder teilweise verschlossen, so dass sich in der Vertiefung 18 aufgrund der durch die unteren Druckluftdurchgänge 55 eingeleiteten Druckluft ein Druck aufbaut, der die Matrize 13 wieder in ihre Ausgangsstellung anhebt. Der Druckluftstrom von den Druckluftdurchgängen 55 durch die Vertiefung 18 verhindert ein Eindringen von Verunreinigungen in die Vertiefung 18 und kühlt das Dämpfungselement 19 bzw. die untere Matrizenseite. Bei einer weiteren Ausgestaltung sind an zumindest einer seitlichen Fläche zwischen Werkzeughalter 11 und beweglicher Matrize 13 Luftspalte ausgebildet, in die über seitliche Luftdurchgänge 56 Luft einströmt. Die Druckluft zwischen beweglicher Matrize und Werkzeughalter 11 richtet die bewegliche Matrize 13 aus und ermöglicht während des Schlags ein seitliches Gleiten und danach ein Rückstellen der beweglichen Matrize 13 in die Ausgangsstellung.

Zusätzlich ist dem Werkzeughalter 11 ein Sensor 58 zugeordnet, der die Schwingungen des Werkzeughalters 11 registriert und/oder den Luftdruck in der Vertiefung 18 misst. Damit lassen sich während der Ausführung des Schlages das Vorhandensein und die Höhe von Schwingungen messen. Die Höhe der Schwingungen ist ein Maß für die überschüssige Schlagenergie, die nicht zum Trennen des Werkstücks umgewandelt wurde. Da die überschüssige Energie möglichst vermieden werden muss, dient das Signal des Sensors 58 zur Optimierung der Parameter der Schlagschneidemaschine sowie zur Kontrolle der Funktion des Schlagschneidens. Wird wie in Fig. 3A dargestellt, ein der Vertiefung 18 zugeordneter Drucksensor verwendet, so kann auch die einwandfreie Rückstellung der beweglichen Matrize 13 bei Einleitung von Druckluft in die Vertiefung 18 überprüft werden, wobei nach Rückstellung der Matrize 13 in die Ausgangsposition der Druck innerhalb der Vertiefung 18 auf einen vorgegebenen Wert abfallen muss.

Fig. 3B zeigt eine Ausführung eines Druckluftdurchgangs 55 und/oder 56, wobei mehrere solcher Bohrungen im Werkzeughalter 11 über die Fläche verteilt vorgesehen sind, so dass sich ein gleichmäßiges Luftpolster ausbildet. Wird ein Lochdurchmesser von einigen Mikrometern (10 - 200 µm) verwendet, so kann bei Komprimierung der Luft in den Spalten oder in der Vertiefung 18 die Druckluft nicht schnell genug durch die Bohrungen 55, 56 entweichen und bei Auslenkung stellt sich ein hoher Luftdruck in den Spalten und/oder der Vertiefung 18 ein.

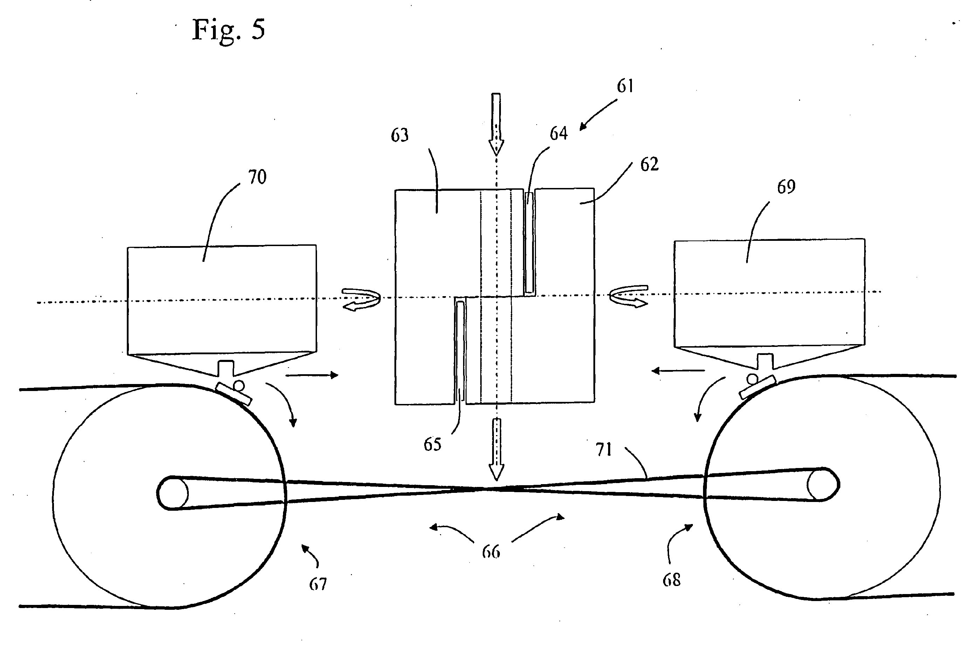

Fig. 5 zeigt schematisch die Anordnung einer Doppelschlag-Schneidemaschine 60. Bei dieser Anordnung ist eine Schneideeinheit 61 schwimmend oder zumindest in Schlagrichtung in beide Richtungen auslenkbar in einem hier nicht dargestellten Werkzeughalter gelagert. Eine erste und zweite Matrize 62, 63 sind dabei gegeneinander und bzgl. des Werkzeughalters verschiebbar. Wie in Fig. 5 dargestellt, wird das Werkstück von oben eingeführt und die abgelenkten Teile nach unten entnommen. Die Orientierung ist hier nur beispielhaft. Die Matrizen 62, 63 sind über ein erstes und zweites Dämpfungselement 64, 65 gegeneinander gelagert. Ein erster und ein zweiter Hammer 69, 70 werden bevorzugt auf einer gemeinsamen Schwerpunktsachse gegeneinander beschleunigt, wobei vorteilhaft auch die Schwerpunktsachse der Matrizen 62, 63 mit derjenigen der Hämmer 69, 70 übereinstimmt. Ein Beschleunigungsaggregat 66 beschleunigt den ersten und zweiten Hammer 69, 70 über eine erste und zweite Beschleunigungsstrecke 67, 68. Die Beschleunigung der Hämmer 69, 70 erfolgt derart, dass deren Impulse gleich sind. Zur einfacheren Dimensionierung und Einstellung sind vorzugsweise die Gewichte der Hämmer 69, 70 gleich. Symbolhaft wird durch den Riemen 71 angedeutet, dass die Beschleunigung über die erste und zweite Beschleunigungsstrecke 67, 68 synchron zueinander erfolgt. Dabei kann beispielsweise ein gemeinsamer Antrieb verwendet werden, der über ein Getriebe, eine Kette oder dergleichen beide Beschleunigungsstrecken miteinander koppelt. Das Entkoppeln der Hämmer 69, 70, die Führung der Hämmer und/oder die Beschleunigung über die Beschleunigungsstrecken 67, 68 erfolgt dabei vorteilhaft entsprechend obigen Ausführungen zur einfachen Beschleunigungsstrecke der Fig. 1.

Fig. 6 zeigt schematisch die Steuerung der Schlagschneidemaschine 1 (oder 61+66) durch eine Steuereinheit 80. An der Steuereinheit 80 werden die Betriebsparameter eingegeben, wie beispielsweise die Art der Matrize und des zu schneidenden Materials, so dass auf vorgegebene Parametersätze mit jeweils einer Standardeinstellung entsprechend der Matrizen und des zu schneidenden Materials zurückgegriffen werden kann. Die Steuereinheit 80 steuert einen Leistungssteller 81 an, der die elektrische Energie für einen Motor 82 zum Antrieb bereitstellt, um beispielsweise das obere Antriebsrad 33 anzutreiben. Die Steuereinheit 80 stellt dabei die Startposition für das Beschleunigen des Hammers 21 ein und steuert die Stärke der Beschleunigung (ggf. zeitlich über die Beschleunigungsstrecke variierbar), gegebenenfalls den Endpunkt der Beschleunigung (so dass bereits vor dem Entkoppeln eine Relaxation zwischen Hammer 21 und Mitnehmer 36 eintritt) und das Rückführen des Mitnehmers zum Rückstellen des Hammers 21 in seine Startposition für den nächsten Schlagvorgang. Weiterhin wird durch die Steuereinheit 80 eine Fördereinheit 83 angesteuert, die die Zuführung des abzuschneidenden Ausgangsmaterials in den Werkzeughalter 11 bewirkt. Zur Optimierung des Schlagprozesses wird das Sensorsignal des Sensors 58 der Steuereinheit 80 zugeführt, so dass diese anhand der Stärke der Überschussenergie (siehe oben) den Prozess durch Einstellen der Beschleunigungsparameter so lange optimieren kann, bis die Überschussenergie minimal ist.

Die Beschleunigung des Hammers 21 (entsprechend gilt dies auch für die Hämmer 69, 70) erfolgt derart, dass der Hammer bzw. Mitnehmer 36 in der Anfangsposition ist und der Beschleunigungsvorgang mittels des Motors 82 startet. Dabei kann auch bei kleinen, erforderlichen Schlagimpulsen (beispielsweise bei einem dünnen Werkstück) von einer maximalen Auslenkungsposition gestartet werden, um über eine lange Beschleunigungsstrecke bei geringer Beschleunigungsstärke beschleunigen zu können. Ist dagegen eine hohe Schlagzahl erforderlich, so wird entsprechend dem notwendigen Schlagimpuls eine möglichst kurze Beschleunigungsstrecke (niedrige Startposition des Hammers 21) gewählt, so dass der Beschleunigungs- und Rückstellvorgang in kurzer Zeit ausführbar ist. Dabei wirkt dann eine hohe Beschleunigung auf den Hammer ein.

In Höhe des unteren Umlenkrads führt das Umlenken der Kette 32 zum Zurückziehen des Schlittens 36a und damit zum Herausfahren des Mitnehmers 36 aus der Ausnehmung 28 (z.B. Fig. 5). Schon nach kurzer Umlenkung des Schlittens 36a (kleiner Umlenkwinkel am Umlenkrad 34) ist der Mitnehmer 36 aus der Ausnehmung 28 herausgezogen und die Bewegung des Hammers 21 setzt sich ungehindert in Richtung Matrizenblock 10 fort. Zum Anheben des Hammers 21 in die Startposition wird der Hammer 21 nach Ausführung des Schlags durch den in Fig. 1A dargestellten Anhebmechanismus 37 entweder synchron zum Zurückfahren des Mitnehmers 36 angehoben, so dass durch das Anheben des Hammers 21 und das Hochfahren des Mitnehmers 36 der Mitnehmer in die Vertiefung 28 eingreift, oder der Hammer 21 wird durch den Hebemechanismus auf eine Höhe oberhalb des unteren Umlenkrads 34 angehoben, so dass die Vorsprünge des Mitnehmers 36 über die untere Rampe 29 gleiten und durch Beiseitedrücken der Kette 32 (Phase Fig. 1B) die Vorsprünge des Mitnehmers nach der Rampe in die Ausnehmung 28 eingreifen. Wie oben erwähnt, wird in dieser Phase durch den Aktuator der Kettenführung 35 die Kettenführungsschiene von der Grundlinie der Kette 32 zurückgezogen. Nach Eingreifen des Mitnehmers 36 in die Ausnehmung 28 lässt sich der Hammer 21 durch das Beschleunigungsaggregat 30 in die Startposition zurückfahren.

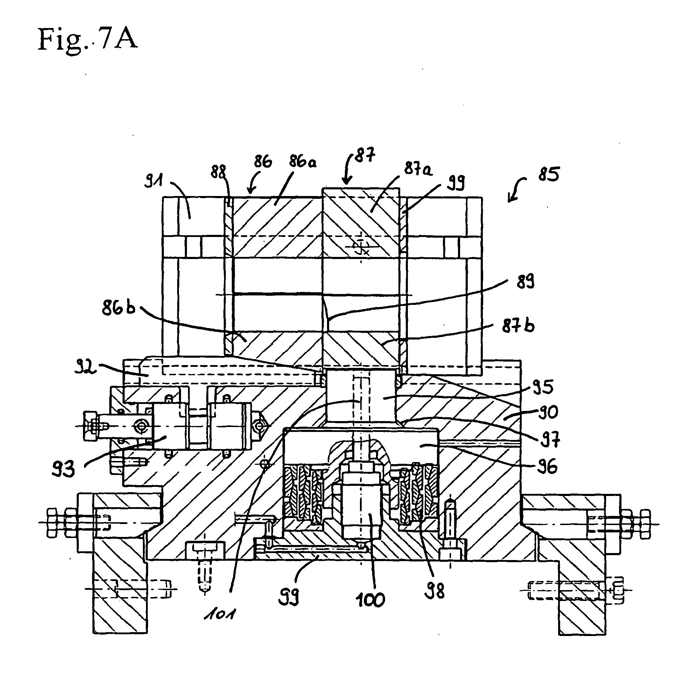

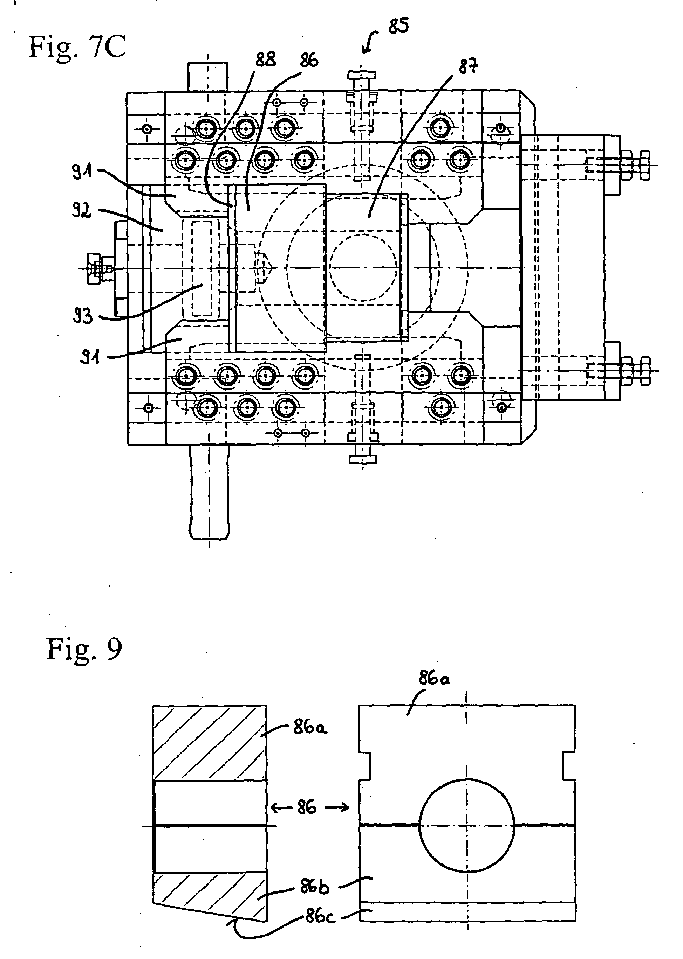

Fig. 7A stellt eine Abwandlung des in Fig. 3A dargestellten Matrizenblockes 10 dar. Der Matrizenblock 85 fasst eine zweiteilige starre Matrize 86 und eine zweiteilige bewegliche Matrize 87. Die Matrizen 86, 87 sind in der senkrecht zur Zeichenebene stehenden Ebene geteilt in einen oberen und unteren Teil 86a, 86b der starren Matrize 86 und einen oberen und unteren Teil 87a, 87b der beweglichen Matrize 87. Gegenüber dem Normmaß des Querschnitts der Matrizen 86, 87 ist die Trennfuge zwischen beiden Teilen 86a, 87a und 86b, 87b so gewählt, dass diese bei Untermaß des Werkstücks immer noch an der Ober- und Unterseite des in die Matrizen 86, 87 eingeschobenen Werkstücks anliegen (betrachtet in Schlagrichtung, die in der Zeichenebene von Fig. 7A von oben nach unten verläuft). In Einführrichtung (von links) ist vor der starren Matrize 86 eine Abstimmplatte 88 mit konischer Eintrittsöffnung angeordnet, so dass bei einem automatischen Vorschub das zu trennende Werkstück sicher in die bewegliche Matrize eingeführt wird. Eintrittsseitig ist die bewegliche Matrize 87 am unteren Teil 87b mit einer Phase 89 versehen, so dass ebenfalls das Einführen des Werkstücks von der starren Matrize 86 kommend erleichtert ist. Die Matrizen sind auf einem Grundstock 90 gelagert, der wiederum auf einen Sockel der Schlagmaschine aufgepratzt ist, wie sie beispielsweise in Fig. 1A dargestellt ist. Die Matrizen sind zwischen Matrizenwangen 91 (siehe auch Draufsicht Fig. 7C) gefasst und sind innerhalb des Matrizenblocks 85 austauschbar, so dass eine Anpassung an veränderte Werkstückquerschnitte gewährleistet ist.

Die Einstellung des Querschnitts der starren Matrize 86 erfolgt mittels eines in Werkzeugförderrichtung verschiebbaren Keils 92, der durch eine Verschiebeeinheit 93 verschoben wird. Der Keil 92 wirkt mit einer rampenförmig ausgebildeten Unterseite 86c (siehe Fig. 9) des unteren Teils 86b der Matrize zusammen, so dass durch Verschieben des Keils 92 der untere Matrizenteil 86b abgesenkt oder angehoben wird. Die Verschieberichtung des Keils 92 ist hier nur beispielhaft und das Anheben bzw. Absenken des unteren Matrizenteils 86b bzw. des oberen Matrizenteils 86a kann auch auf andere Weise mittels einer Verstelleinheit erfolgen. Zum Einlegen bzw. Fördern des zu bearbeitenden Werkstücks wird in der dargestellten Ausführung der Keil 92 nach links zurückgezogen, so dass sich der untere Matrizenteil 86b nach unten absenkt. Damit öffnet sich der Querschnitt in Schlagrichtung der starren Matrize 86 und die Verschiebbarkeit des Werkstücks im Öffnungsquerschnitt ist gegeben. Nach Positionierung des Werkstücks wird der Keil 92 wieder nach rechts verschoben, so dass eine Klemmung des Werkstücks oben und unten erfolgt.

Die bewegliche Matrize 87 ruht auf einem Dämpfungskolben 95, der wiederum über eine Träger- bzw. Verteilungsplatte 96 auf der Federringanordnung 98 als Dämpfungselement ruht. Die Federringanordnung 98 umfasst hier drei konzentrische Kreise von Federringsätzen, die jeweils eine unterschiedliche Anzahl von Federring-Einzelelementen umfassen. Die Federringanordnung 98 ruht auf einer Druckplatte 99, die wiederum von unten an den Grundstock 90 angeschraubt ist. Beim Anschrauben der Druckplatte 99 wird die Federringanordnung 98 zwischen Druckplatte 99 und Grundstock 90 komprimiert und eine durch den Kompressionsweg vorgegebene Vorspannspannkraft eingestellt. Hierbei wird die Federringanordnung 98 zwischen der Druckplatte 99 und dem Anschlag 97 am unteren Ende des Dämpfungskolben 95 komprimiert. Wird ein Schlag auf die Oberseite des oberen Matrizenteils 87a ausgeführt, so wird zunächst das Werkstück zwischen den oberen und unteren Matrizenteil 87a, 87b geklemmt, bis eine der Vorspannung der Federringanordnung 98 entsprechende Gegenkraft aufgebaut ist, wonach sich dann die bewegliche Matrize 87 mit dem eingespannten Werkstück nach unten bewegt.

Ein unterhalb der beweglichen Matrize 87 angeordneter Hydraulikzylinder 100 hebt die bewegliche Matrize 87 an, bis diese an einem Anschlag (nicht dargestellt) anliegt und in dieser angehobenen Position mit der starren Matrize 86 fluchtet, d.h. die Öffnungen in den Matrizen 86, 87 zur Aufnahme des zu trennenden Werkstücks sind deckungsgleich nebeneinander positioniert. Nach der Ausführung des Trennschlages wird somit durch den Zylinder 100 die Matrize 87 in die Ausgangsposition zurückgestellt. Eine durch den Zylinder 100 betätigte Kolbenstange 101 ist durch eine Bohrung in der Trägerplatte 96 geführt und liegt nach dem Anheben direkt an der Unterseite der beweglichen Matrize 87 an. Während des Schlages zum Trennen ist die Kolbenstange 101 normalerweise eingezogen. In einer weiteren Ausgestaltung wirkt der Hydraulikzylinder 100 über die Kolbenstange auf die Trägerplatte 96 sowohl zum Anheben der Matrize 87 als auch zum Anlegen einer Vorspannung an die Matrize 87 während des Schlages. Dabei unterstützt der Hydraulikzylinder 100 die Dämpfung der Auslenkung der beweglichen Matrize 87.

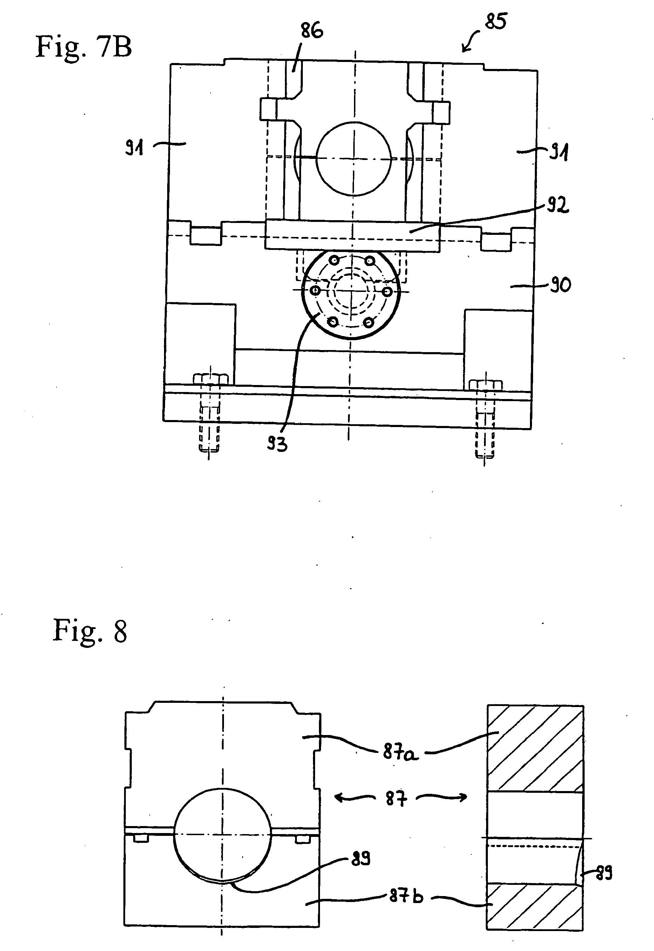

Die Figuren 7C und 7B zeigen eine Draufsicht auf den Matrizenblock 85 und eine eintrittseitige Ansicht. Die Fig. 8 zeigt eine eintrittseitige Ansicht der zweiteiligen, beweglichen Matrize 87 und die Fig. 9 zeigt eine eintrittseitige Ansicht und Querschnittsansicht der starren Matrize 86.

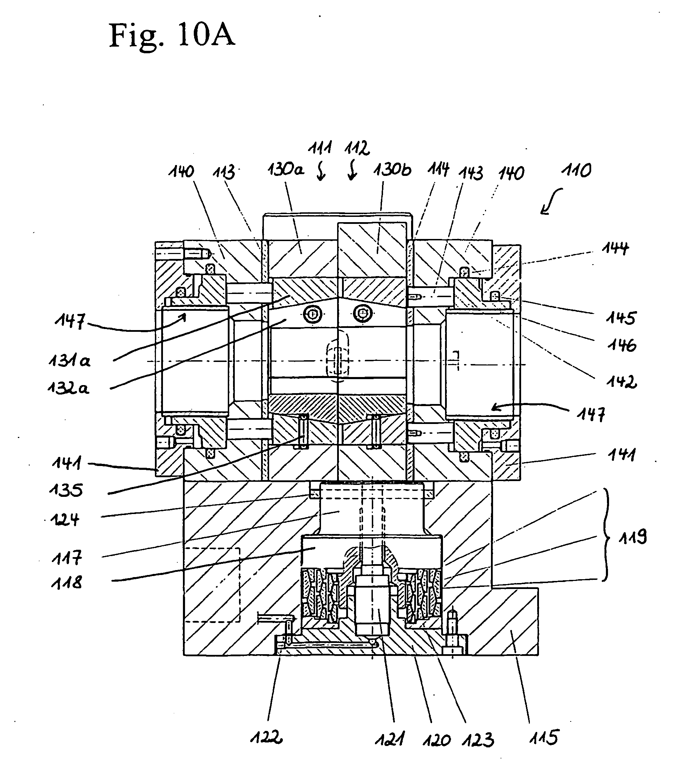

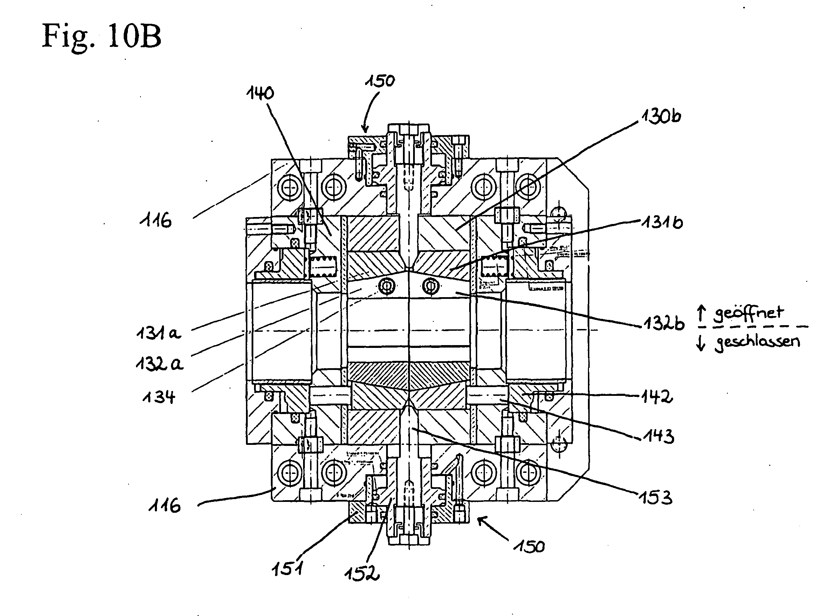

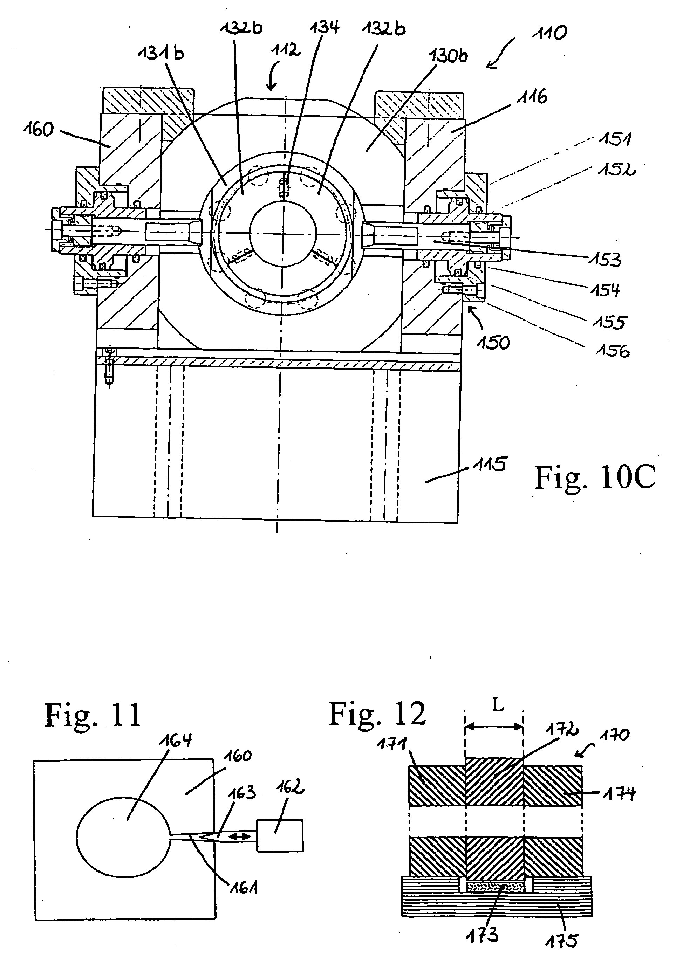

Die Figuren 10A bis 10C zeigen Querschnittsansichten in verschiedenen Richtungen durch ein weiteres Ausführungsbeispiels eines Matrizenblocks 110. Fig. 10A zeigt eine seitliche Querschnittsansicht 10a durch eine Achse längs des Vorschubs eines zu trennenden Werkstücks, Fig. 10B zeigt eine Querschnittsansicht in Draufsicht und Fig. 10C zeigt eine seitliche Querschnittsansicht in der Ebene, in der eine starre Matrize 111 und eine bewegliche Matrize 112 des Matrizenblocks 110 aneinanderliegen. Vom Grundaufbau her stimmt der Matrizenblock 110 mit den in Fig. 3A und 7A dargestellten Matrizenblöcken 10 und 85 überein. Es werden daher im folgenden nur abweichende Elemente oder Anordnungen detailliert beschrieben, während die aus den vorbeschriebenen Matrizenblöcken bekannten Elemente nur kurz dargestellt sind. Bei der in Fig. 10A dargestellten Anordnung tritt das zu trennende Stangenmaterial von links in die Öffnung des Matrizenblocks 110 ein, wobei von links her kommend zunächst eine linke Stimplatte 140, eine Abstimmplatte 113, die starre Matrize 111, die bewegliche Matrize 112, und eine Druckplatte 114 und die rechte Stimplatte 140 angeordnet sind. Bezüglich der Funktion der Abstimmplatte 113 und der Druckplatte 114 wird auf die entsprechenden Elemente 88 und 99 der Fig. 7A verwiesen. Seitlich werden die Matrizen 111, 112 durch Matrizenwangen 116 (Draufsicht Fig. 10B) gestützt. In einem Grundstock 115 sind ein Dämpfungskolben 117, eine Trägerplatte 118, eine Federringanordnung 119, eine Druckplatte 120, ein Hydraulikzylinder 121, eine Hydraulikzuleitung 122 zum Betätigen des Zylinders 121 und eine Stufenplatte 123 zum Stützen der Federringe 119 unterschiedlicher Höhe, sowie ein Führungsring 124 angeordnet. Bezüglich der Funktion der Elemente 117 bis 124 wird auf die entsprechende Funktion der Elemente 95 bis 100 beim Matrizenblock 85 (Fig. 7A) verwiesen.

Zum Klemmen des Stangenmaterials in den Öffnungen der Matrizen 111 und 112 weisen diese einen geringfügig veränderbaren Öffnungsquerschnitt auf. Die starre Matrize 111 ist dabei von außen nach innen zusammengesetzt aus einem ersten Außenring 130a, in den ein erster Innenring 131 a eingesetzt ist. Im ersten Innenring 131 a sind wiederum drei Innensegmente 132a angeordnet, vgl. Seitenansicht der entsprechenden Innensegmente 132b der beweglichen Matrize 112 in Fig. 10C. Entsprechend ist die bewegliche Matrize 112 zusammengesetzt aus einem zweiten Außenring 130b, darin einem zweiten Innenring 131b und den Innensegmenten 132b. Zusammengesetzt bilden jeweils die drei Innensegmente 132a, 132b wiederum einen durch Spalte unterbrochenen Ring, wobei jeweils in den Spalten zwischen den Innensegmenten 132a, 132b O-Ringe 134 eingesetzt sind. Die O-Ringe dienen einerseits der Ausrichtung der Segmente zueinander bei der Montage und andererseits dem Auseinanderdrücken der Innensegmente 132a, 132b, wenn diese an deren Umfang vom ersten bzw. zweiten Innenring 131a, 131 b freigegeben werden (siehe unten).

Der erste und der zweite Innenring 131a, 131b sind jeweils zwischen dem ersten bzw. zweiten Außenring 130a, 130b und den Innensegmenten 132a, 132b axial verschiebbar gelagert. Die Außenfläche des Innenrings 131a, 131b bildet mit der Innenfläche des Außenrings 130a, 130b eine axial parallel verlaufende Führungsfläche zum axialen Verschieben. Die Innenfläche des Innenrings 131a, 131b hat bezüglich der Außenfläche der Innensegmente 132a, 132b einen rampenartigen Verlauf, so dass bei axialer Verschiebung des Innenrings die Innensegmente 132a, 132b spannzangenartig in radiale Richtung zusammengeschoben oder freigegeben werden. Bezugnehmend auf Fig. 10A bewirkt eine Verschiebung des ersten Innenrings 131a nach rechts ein Zusammendrücken der Innensegmente 132a zueinander, so dass der Öffnungsquerschnitt zur Aufnahme des abzulängenden Stangenmaterials verringert wird. Bei der beweglichen Matrize 112 bewirkt ein Verschieben des zweiten Innenrings 131b nach links ebenfalls ein Zusammendrücken der Innensegmente 132b gegeneinander unter Verringerung des Öffnungsquerschnitts. Beim Vergrößern des Öffnungsquerschnitts, also beim Freigeben des geklemmten Stangenmaterials, wird der erste Innenring 131a nach links verschoben und die O-Ringe 134 zwischen den Innensegmenten 132a drücken die Innensegmente auseinander. Umgekehrt wird zum Öffnen der beweglichen Matrize 112 der keilförmige zweite Innenring 131b nach rechts verschoben, wobei die O-Ringe 134 die Innensegmente 132b auseinanderdrücken. Mittels eines Drehsicherungsrings 135 sind der Innenring 131a, 131b und das unterste der Innensegmente 132a, 132b am Außenring 130a, 130b gegen Verdrehung gesichert.

Zum axialen Verschieben des ersten Innenrings 131a in Klemmrichtung (nach rechts) bzw. des zweiten Innenrings 131b in Klemmrichtung (nach links) ist jeweils eine Klemmhydraulik 147 zwischen der Stirnplatte 140 und einem Aufsatz 141 angeordnet. Hydraulisch wird ein Schubkolben 142 zwischen der Stimplatte 140, dem Aufsatz 141 und einer Innenbuchse 146 in axiale Richtung verschoben. An der Innenseite des Schubkolbens 142 sind über den Umfang der Innenringe 131a, 131b mehrere Schubbolzen 143 verteilt angeordnet (8 Stück entlang des Umfangs, wie der Fig. 10C entnommen werden kann), die an der außenliegenden Seitenfläche der Innenringe 131a, 131b anliegen und diese nach rechts (starre Matrize 111) bzw. links (bewegliche Matrize 112) verschieben. Durch Druckbeaufschlagung von hinten wird der Schubkolben 142 zum Klemmen nach vorne (in Richtung des Inneren des Matrizenblocks 110) verschoben. Zum Lösen der Klemmung wird der Kolben rückseitig druckfrei gestellt und durch die Innenringe 131 a, b in Richtung Aufsatz 141 zurückgeschoben. Die Abdichtung des Schubkolbens 142 zwischen Aufsatz 141 und Stimplatte 140 erfolgt durch Dichtungen 144, 145. In weiterer, nicht dargestellter Ausführung kann der Kolben 142 beidseitig hydraulisch betätigt vor- und zurückgeschoben werden.

Wie aus den Fig. 10B und 10C zu erkennen ist, sind seitlich am Matrizenblock auf beiden Seiten zum Freigeben eines geklemmten Werkstücks jeweils eine Rückstellhydraulik 150 angeordnet. In den Seitenwangen 116 des Matrizenblocks 110 sind Zylinderelemente 151 eingelassen, in denen jeweils ein Kolben 152 hydraulisch in Vorwärtsund Rückwärtsrichtung betätigbar ist. Im Kolben 152 ist ein Rückstelldom 153 eingesetzt, der zwischen den beiden Außenringen 130a, 130b hindurchgeführt ist und in eine keilförmige Vertiefung am Außenrand zwischen den Innensegmenten 132a, 132b eingreift. Durch Vorschieben des Kolbens 152 schiebt sich die keilförmige Spitze des Rückstelldoms 153 in die dreieckförmige Nut zwischen dem ersten und zweiten Innenring 131a, 131b und schiebt die Innenringe auseinander. Zum Lösen der Klemmung des Werkstücks in den Öffnungen der Matrizen 111, 112 wird somit der Rückstelldom 153 vorgefahren und der erste Innenring 131 a nach links (Fig. 10A) sowie der zweite Innenring 132b nach rechts verschoben, wodurch die freigegebenen Segmente 132a, 132b den Öffnungsquerschnitt erweitern. Der Kolben 152 ist durch Dichtungen 154, 155, 156 im Zylinderelement 151 verschiebbar und dichtend gelagert. Nach dem Lösen der Klemmung wird der Rückstelldom 153 durch Gegendruck am Kolben 152 zurückgefahren, so dass nach dem Vorschub des Werkstücks erneut durch die Klemmhydraulik(en) 147 gespannt werden kann.

In der Draufsicht der Fig. 10B ist der Matrizenblock 110 in der oberen Hälfte in geöffneter Stellung dargestellt, während er in der unteren Zeichnungshälfte in geschlossener Stellung dargestellt ist. In Fig. 10A ist die bewegliche Matrize 112 in geöffneter Stellung dargestellt, während die starre Matrize 111 in Klemmstellung dargestellt ist.

Fig. 11 zeigt schematisch eine weitere Ausführung einer Matrize 160, die anstelle der starren Matrizen 86, 111 und/oder der beweglichen Matrizen 87, 112 im Matrizenblock 85 bzw. 110 angeordnet ist und ebenfalls einen veränderlichen Querschnitt aufweist. Die Matrize 160 umgibt die Öffnung 164 zum Aufnehmen des Werkstücks am gesamten Umfang bis auf einen Spalt 161, der vorzugsweise radial verläuft. Der Spalt 161 hat an der Außenseite einen konischen Verlauf, so dass ein Spreizdorn 163 durch eine Hydraulikeinheit 162 in den Spalt eingefahren oder aus diesem herausgefahren werden kann. Durch das Ein- oder Ausfahren des Spreizdorns ist das Spaltmaß veränderbar, so dass sich der Öffnungsquerschnitt 164 geringfügig verändern lässt. Vorteilhaft ist der Spalt und der Öffnungsquerschnitt so ausgebildet, dass bei zurückgezogenem Spreizdorn 163 die Matrize ein in der Öffnung 164 befindliches Werkstück einklemmt, auch wenn beispielsweise durch Fertigungstoleranzen des Werkstücks ein unterer Grenzwert der Querschnittsfläche des Werkstücks erreicht wird. Während der Ausführung des Schlages auf die bewegliche Matrize ist vorteilhaft der Spreizdorn 163 vollständig aus dem Spalt 161 zurückgezogen. Dadurch ist die Matrize 160 in Klemmstellung und im Falle der beweglichen Matrize erfolgt keine Rückkopplung zwischen der Matrizenbewegung und der Hydraulikeinheit 162. Zum axialen Vorschub des Werkstücks bzw. Stangenmaterials wird zunächst der Spreizdorn 163 so weit in den Spalt 161 eingefahren, so dass auch bei Erreichen der oberen Fertigungstoleranz des Querschnitts des Werkstücks oder Stangenmaterials ein klemmfreier Vorschub in axiale Richtung ermöglicht wird. Nach dem Vorschub des Stangenmaterials wird der Spreizdom 163 wieder aus dem Spalt 161 zurückgezogen. Bei einer weiteren, hier nicht dargestellten Ausführung sind die an den Spalt 161 angrenzende obere und untere Hälfte der Matrize 160 so mit einer Betätigungseinheit verbunden, dass das Spaltmaß des Spaltes 161 gegenüber dem entspannten Zustand erweiterbar und/oder verringerbar ist. Durch die Betätigungseinheit wird auch während der Ausführung des Trennschlages eine zusätzliche Klemmkraft durch Verringerung des Spaltmaßes auf die Matrize 160 übertragen.

Fig. 12 zeigt eine schematische Querschnittsansicht durch eine hintereinanderliegende Anordnung 170 von drei Matrizenelementen 171, 172, 173. Zwischen einer ersten starren Matrize 171 und einer zweiten starren Matrize 174 ist eine bewegliche Matrize 172 angeordnet. In Schlagrichtung ist zwischen der beweglichen Matrize 172 und einem Grundstock 175 ein Dämpfungselement 173 angeordnet. Das Dämpfungselement 173 kann entsprechend der zu den anderen Ausführungsbeispielen beschriebenen Dämpfungselemente ausgebildet sein. Weiterhin können eine, mehrere oder alle der Matrizen 171, 172 und 174 mit einem veränderbaren Querschnitt gemäß den Ausführungsbeispielen in den Fig. 7A, 10A oder 11 ausgebildet sein - enstprechend können eine, mehrere oder alle Matrizen einen festen Querschnitt aufweisen. Die Matrizenanordnung 170 eignet sich besonders zur Ablängung von Stangenmaterial, wenn wiederholt Stangenmaterial mit gleicher, relativ kurzer Länge L abgelängt werden soll. Dabei ist die Tiefe der beweglichen Matrize 172 entsprechend der gewünschten Länge L des Werkstücks ausgebildet. Beim Vorschub des Stangenmaterials wird jeweils um die Vorschublänge 2L vorgeschoben, so dass nach dem Trennen des Stangenmaterials jeweils an den Kanten zwischen der ersten festen Matrize 171 und der beweglichen Matrize 172 sowie der Kante zwischen der beweglichen Matrize 172 und der zweiten festen Matrize 174 zwei Werkstücke mit jeweils der Länge L abgetrennt werden. Durch die Symmetrie der Trennung wird eine gleichmäßigere Belastung des Werkzeugs bzw. des Matrizenblocks während des Trennschlages erreicht, so dass der Matrizenblock schwächer dimensioniert werden kann bzw. die Abnutzung des Matrizenblocks geringer ist.

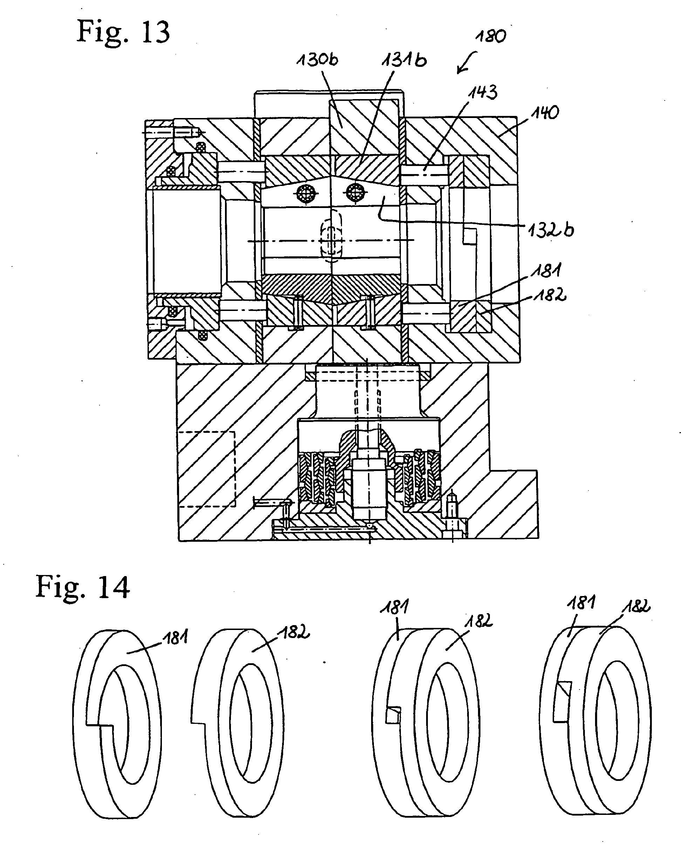

Fig. 13 stellt einen Matrizenblock 180 als Abwandlung des Matrizenblockes 110 von Fig. 10A dar. Abgesehen von den Spannscheiben 181, 182, die die Klemmhydraulik 140-147 auf der rechten Seite der Fig. 10A ersetzen, sind alle Elemente zum Matrizenblock 110 identisch und werden daher hier nicht weiter beschrieben. In der rechten Stimplatte 140 des Matrizenblocks 180 sind Spannscheiben 181 und 182 angeordnet, deren nicht gegenüberliegenden Seitenflächen eben sind. Die linke Seitenfläche der ersten Spannscheibe 181 wirkt auf die Bronzebolzen 143 und die rechte Seitenfläche der zweiten Spannscheibe 182 liegt an der Stimplatte 140 an. Die sich gegenüberstehenden Seitenflächen der Spannscheiben 181, 182 weisen zueinander gepaarte, helix- oder wendelförmige Anlageflächen auf. Wie in Fig. 14 in den beiden rechten Darstellungen veranschaulicht, ändert sich das axiale Maß der beiden aufeinanderliegenden Spannscheiben, wenn diese zueinander verschiedene Drehwinkel einnehmen. Bis zu einem vorgegebenen Winkel (kleiner ca. 150°) lassen sich die Spannscheiben zueinander verdrehen, während die äußeren Seitenfläche parallel zueinander stehen und die linke Seitenfläche der ersten Spannscheibe 181 die Bolzen 143 synchron zueinander nach links verschiebt. Die Bolzen 143 wirken wiederum auf den zweiten Innenring 131b, der dadurch die Innensegmente 132b nach Innen verschiebt (siehe oben zum Klemmen eines Werkstücks beim Matrizenblock 110).

Ähnlich der Wirkungsweise der Klemmhydraulik 140-147 auf der rechten Seite der Fig. 10A wird durch Drehen der ersten Spannscheibe 181 nach links (wenn man in der Zeichenebene von Fig. 14 von links in axiale Richtung schaut) eine Klemmung des Werkstücks erreicht, während durch eine Drehung nach rechts die Klemmung des Werkstücks gelöst wird. Entsprechend gilt dies, wenn anstelle der ersten Spannscheibe 181 die zweite Spannscheibe 182 gedreht wird. Eine Betätigungseinrichtung zum Drehen der rechten oder linken Spannscheibe ist vorgesehen, hier aber nicht weiter dargestellt.

Die oben dargestellten Matrizenblöcke lagern beim Einsatz in einer Schlagschneidevorrichtung vorteilhaft auf einer Stützstruktur aus Mineralguss, um die Übertragung von Schockwellen zu dämpfen.

## Patentansprüche

1. Schneideeinheit für eine Schlagschneidevorrichtung (1) mit zumindest zwei Matrizenelementen (12, 13; 86, 87; 111, 112) zum Aufnehmen eines zu bearbeitenden Werkstücks (2),
wobei zumindest eines der Matrizenelemente relativ zu dem oder den anderen Matrizenelementen beweglich gelagert ist,
wobei zwischen einem Träger (10; 90; 115) und dem zumindest einen beweglichen Matrizenelement (13; 87; 112), gegenüberliegend zur Aufschlagseite des beweglichen Matrizenelements eine Dämpfungseinrichtung (19; 98; 119) mit einem Dämpfungskolben (95; 117) angeordnet ist,
**gekennzeichnet durch**
einen zwischen dem Träger (10; 90; 115) und dem zumindest einen beweglichen Matrizenelement (13; 87; 112) angeordneten Hydraulikzylinder (100; 121); und
eine **durch** den Dämpfungskolben (95; 117) geführte und **durch** den Hydraulikzylinder (100; 121) betätigbare Kolbenstange (101).

2. Schneideeinheit nach Anspruch 1, wobei nach der Ausführung eines Trennschlages auf das bewegliche Matrizenelement (13; 87; 112) durch Betätigung des Hydraulikzylinders (100; 121) die Kolbenstange (101) das bewegliche Matrizenelement in die Ausgangsposition zurückstellt.

3. Schneideeinheit nach Anspruch 1 oder 2, wobei während des Trennschlages die Kolbenstange (101) eingezogen ist.

4. Schneideeinheit nach Anspruch 1, 2 oder 3, wobei die Kolbenstange (101) zum Anheben des beweglichen Matrizenelements (13; 87; 112) an deren Unterseite anliegt.

5. Schneideeinheit nach Anspruch 1.2 oder 3, wobei während des Trennschlages der Hydraulikzylinder (100, 121) über die Kolbenstange (101) auf das bewegliche Matrizenelement (13; 87; 112) wirkt und die Dämpfung der Auslenkung der beweglichen Matrize unterstützt.

6. Schneideeinheit nach einem der vorhergehenden Ansprüche, wobei der Hydraulikzylinder (100, 121) unterhalb des Dämpfungskolbens (95; 117) angeordnet ist.

7. Schneideeinheit nach einem der vorhergehenden Ansprüche, wobei der Hydraulikzylinder (100, 121) auf einer Druckplatte (99) der Schneideeinheit angeordnet ist.

8. Schneideeinheit nach einem der vorhergehenden Ansprüche, **dadurch gekennzeichnet, dass** die bewegliche Matrize (87, 112) eine zumindest teilweise gefaste Eintrittsöffnung aufweist.

9. Schneideeinheit nach einem der vorhergehenden Ansprüche, **dadurch gekennzeichnet, dass** das Dämpfungselement (98; 119; 173) in Schlagrichtung unter Vorspannung steht.

10. Schneideeinheit nach einem der vorhergehenden Ansprüche, **dadurch gekennzeichnet, dass** die Dämpfungseinrichtung (19; 64, 65; 98; 119) zumindest eine Ringfeder (51, 52) aufweist.

11. Schlagschneidevorrichtung mit einer Schneidesinheit (10, 61) gemäß einem der vorhergehenden Ansprüche zum Bearbeiten von Werkstücken (2), einer Beschleunigungseinheit (30, 66) und einem gegen die Schneideeinheit (30, 66, 85) beschleunigbaren Schlagelement (21; 69, 70).

## Claims

1. Cutting unit for an impact cutting apparatus (1) comprising at least two matrix elements (12, 13; 86, 87; 111, 112) for receiving a workpiece (2) to be processed,
wherein at least one of the matrix elements is movably supported relative to the other one or the other matrix elements,
wherein between a support (10; 90; 115) and the at least one movable matrix element (13; 87; 112), opposite to the impinging side of the moveable matrix element, a damping device (19; 98; 119) comprising a damping piston (95; 117) is arranged,
**characterized by**
a hydraulic cylinder (100; 121) arranged between the support (10; 90; 115) and the at least one movable matrix element (13; 87; 112); and
a piston rod (101) guided through the damping piston (95; 117) and adapted to be actuated by the hydraulic cylinder (100; 121).

2. Cutting unit according to claim 1, wherein after performing a separating impact on the movable matrix element (13; 87; 112) by actuation of the hydraulic cylinder (100; 121) the piston rod (101) resets the moveable matrix element back to the starting position.

3. Cutting unit according to claim 1 or 2, wherein during the separating impact the piston rod (101) is retracted.

4. Cutting unit according to claim 1, 2 or 3, wherein the piston rod (101) for lifting the movable matrix elements (13; 87; 112) abuts against the lower side thereof.

5. Cutting unit according to claim 1, 2 or 3, wherein during the separating impact the hydraulic cylinder (100,121) acts upon the moveable matrix element (13; 87; 112) via the piston rod (101), and assists the dampening of the deflection of the movable matrix.

6. Cutting unit according to any of the previous claims, wherein the hydraulic cylinder (100,121) is arranged below the damping piston (95; 117).

7. Cutting unit according to any of the previous claims, wherein the hydraulic cylinder (100, 121) is arranged on a pressure plate (99) of the cutting unit.

8. Cutting unit according to any of the previous claims, **characterized in that** the movable matrix (87, 112) comprises an at least partially chamfered input opening.

9. Cutting unit according to any of the previous claims, **characterized in that** the damping element (98; 119; 173) is biased in impact direction.

10. Cutting unit according to any of the previous claims, **characterized in that** the damping device (19; 64, 65; 98; 119) comprises at least one ring spring (51, 52).

11. Impact cutting apparatus comprising a cutting unit (10, 61) according to any of the previous claims for processing workpieces (2), an acceleration unit (30, 66) and an impact element (21; 69, 70) adapted to be accelerated against the cutting unit (30, 66, 85).

## Revendications

1. Unité de coupe pour un dispositif de coupe par impact ( 1 ) comportant au moins deux éléments de matrice (12, 13 ; 86, 87 ; 111, 112) pour recevoir une pièce (2) à usiner,
sachant qu'au moins un des éléments de matrice est monté à déplacement par rapport à l'autre ou aux autres éléments de matrice,
sachant qu'un équipement d'amortissement (19 ; 98 ; 119) pourvu d'un piston d'amortissement (95 ; 117) est disposé entre un support (10 ; 90 ; 115) et l'élément de matrice mobile au moins unique (13 ; 87 ; 112), en vis-à-vis du côté d'impact de l'élément de matrice mobile,
**caractérisée par**
un vérin hydraulique (100 ; 121) disposé entre le support (10 ; 90 ; 115) et l'élément de matrice mobile au moins unique (13 ; 87 ; 112) ; et
une tige de piston (101) guidée par le piston d'amortissement (95 ; 117) et pouvant être actionnée par le vérin hydraulique (100 ; 121).

2. Unité de coupe selon la revendication 1, sachant qu'à la suite de l'exécution d'un impact de coupe sur l'élément de matrice mobile (13 ; 87 ; 112), par actionnement du vérin hydraulique (100 ; 121), la tige de piston (101) ramène l'élément de matrice mobile dans la position initiale.

3. Unité de coupe selon la revendication 1 ou 2, sachant que la tige de piston (101) est rentrée pendant l'impact de coupe.

4. Unité de coupe selon la revendication 1, 2 ou 3, sachant que la tige de piston (101), afin de relever l'élément de matrice mobile (13 ; 87 ; 112), s'applique contre la face inférieure de ce dernier.

5. Unité de coupe selon la revendication 1, 2 ou 3, sachant que, pendant l'impact de coupe, le vérin hydraulique ( 100, 121 ) agit par l'intermédiaire de la tige de piston (101) sur l'élément de matrice mobile (13 ; 87 ; 112) et aide à amortir l'excursion de la matrice mobile.

6. Unité de coupe selon l'une des revendications précédentes, sachant que le vérin hydraulique (100, 121) est disposé en dessous du piston d'amortissement (95 ; 117).

7. Unité de coupe selon l'une des revendications précédentes, sachant que le vérin hydraulique (100, 121) est disposé sur une plaque de pression (99) de l'unité de coupe.

8. Unité de coupe selon l'une des revendications précédentes, **caractérisée en ce que** la matrice mobile (87, 112) présente une ouverture d'admission au moins partiellement chanfreinée.

9. Unité de coupe selon l'une des revendications précédentes, **caractérisée en ce que** l'élément d'amortissement (98 ; 119 ; 173) se trouve sous précontrainte dans la direction d'impact.

10. Unité de coupe selon l'une des revendications précédentes, **caractérisée en ce que** l'équipement d'amortissement (19 ; 64, 65 ; 98 ; 119) présente au moins un ressort annulaire (51, 52).

11. Dispositif de coupe par impact pourvu d'une unité de coupe (10, 61) selon l'une des revendications précédentes pour l'usinage de pièces (2), d'une unité d'accélération (30, 66), et d'un élément d'impact (21 ; 69, 70) pouvant être accéléré vers l'unité de coupe (30, 66, 85).
